Europäisches Patentamt

European Patent Office

Office européen des brevets

(11) Publication number: **0 263 989 B1**

# EUROPEAN PATENT SPECIFICATION

(45) Date of publication of patent specification: **11.03.92** (51) Int. Cl.⁵: **C08J 9/228**, C08L 23/02

(21) Application number: **87113475.5**

(22) Date of filing: **15.09.87**

(54) **Process for production of foamed molded articles of polypropylene resin.**

(30) Priority: **16.09.86 JP 218708/86**

(43) Date of publication of application:
**20.04.88 Bulletin 88/16**

(45) Publication of the grant of the patent:
**11.03.92 Bulletin 92/11**

(84) Designated Contracting States:
**BE CH DE ES FR GB IT LI NL SE**

(56) References cited:
**EP-A- 0 071 981**
**EP-A- 0 123 144**
**EP-A- 0 147 690**
**EP-A- 0 164 855**
**EP-A- 0 224 265**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **Maeda, Hirofumi**
**1-773, Ooazahara**
**Takatsuku-shi Osaka-fu(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a process for production of foamed molded articles (hereinafter referred to as "foamed articles") of polypropylene resin which are employed e.g. as thermal insulators, shock absorbing packaging materials, reusable containers, core materials for bumpers.

Foamed articles of polypropylene are excellent in resistance to chemicals, resistance to heat and strain recovery after compression, as compared to foamed articles of polystyrene. Further the foamed articles are also excellent in resistance to heat and compressive strength, even when compared with foamed articles of polyethylene so that they have been widely used as shock absorbing packaging materials, reusable containers and core materials for bumpers. To produce such foamed articles of polypropylene, there are known the following methods.

(A) A method which comprises treating pre-expanded beads of polyolefin with an inorganic gas under pressure to impregnate the beads with the inorganic gas, gradually releasing the pressure, filling the beads in a mold which can be closed but cannot be sealed while the inner pressure of the beads is kept at 1.18 atms. or more and thermally fusing with steam to prepare a molded article in the shape of the mold (US-A-3,953,558).

(B) A method which comprises filling pre-expanded beads of polyolefin in a mold which can be closed but cannot be sealed, thermally fusing the beads with steam, withdrawing the molded article from the mold and, thermally curing while the volume of the molded article is 70 to 110% of the volume of the mold to prepare the molded article in the shape of the mold (US-A-4,631,159).

(C) A method which comprises compressing pre-expanded beads of cross-linked polyolefin to 80% or less of the apparent bulk volume of the raw beads by gaseous pressure, filling the compressed beads in a mold and thermally fusing the to give a molded article in the shape of the mold JP-A-33996/1978).

However, Method (A) described above involves a defect that initial investment becomes large because the installation for the compressive treatment with inorganic gas is of a large scale and Method (B) has also a defect that products having a complicated shape are inferior in visual appearance such as sink mark, surface property, etc. Further, Method (C) is not sufficiently satisfactory in surface property and dimensional accuracy.

EP-A-224 265 relates to expansion-molded articles of prefoamed polypropylene resin which shows two peaks on a DSC curve, an inherent peak inherent to the polyproyplene resin and a high temperature peak and which has a bulk density of 0.04 g/cm$^3$ or higher corresponding to a melting energy of 8 to 12 J/g at the high-temperature peak or a bulk density lower than 0.04 g/cm$^3$ corresponding to a melting energy of at least 8 J/g. These prefoamed polypropylene resins are filled in a mold without applying any pretreatment to the pre-foamed particles to build up an internal pressure therein and are then heated.

EP-A-123 144 describes polypropylene resin pre-foamed particles having a crystal structure characterized in that in a DSC curve appears a peak characteristic of the polypropylene resin and another peak (high temperature peak) at a higher temperature than the tempertaure at which the characteristic peak appears.

In EP-A-147 690 preliminary foamed particles of a noncrosslinked polypropylene type resin based on a mixture of an α-olefin/propylene random copolymer having an amount of the heat of crystallization of not more than 10 cal/g in differential scanning calorimetry and an ethylene/propylene random copolymer are described.

EP-A-71 981 discloses foamed molded articles of a polypropylene resin having a specified latent heat of crystallization, a specified density and a specified number of cells.

EP-A-164 855 relates to a process for the production of expanded particles of a polymeric material in which the unexpanded particles are impregnated with the nitrogen-containing inorganic gas in place of conventional volatile blowing agents.

An object of the present invention is to provide a process for production of foamed articles of polypropylene having good dimensional accuracy and having excellent fusion rate and surface property with high productivity.

The above object has been solved by the finding that by controlling the degree of the peak fusion heat, $Q_H$ (quantity of heat determined from the peak fusion area) based on the melting point at the high temperature peak of the two melting point peaks of pre-expanded beads of propylene resin measured by the differential scanning calorimetry (hereafter referred to as DSC method) to a specific range and by controlling the compression rate of the pre-expanded beads to a specific range, the problems described above could be overcome and, have accomplished the present invention.

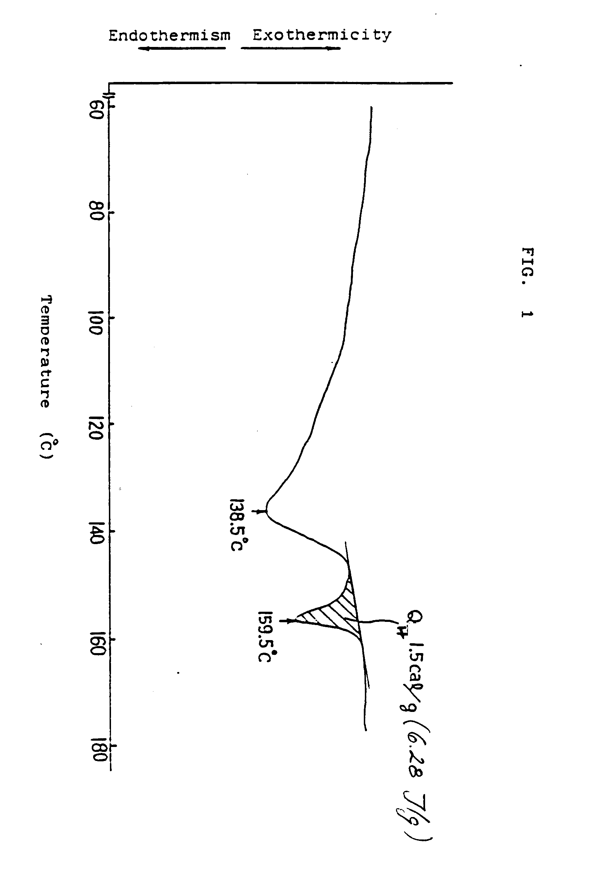

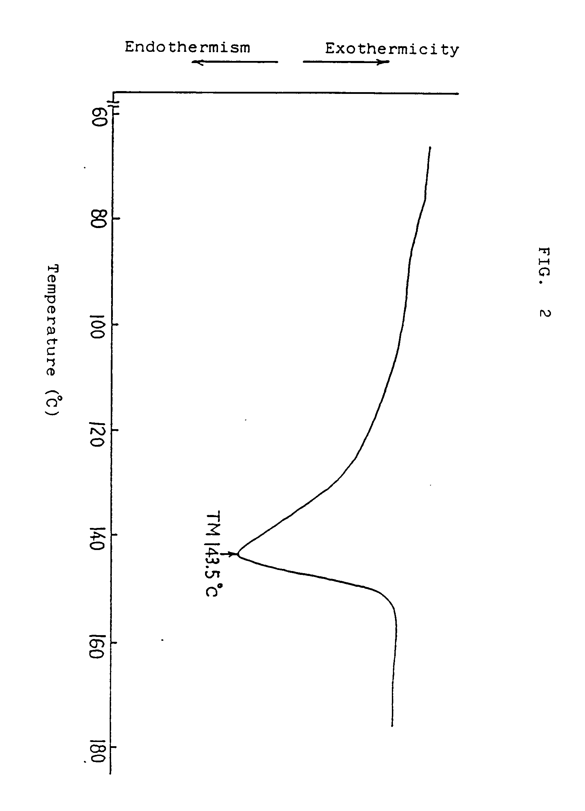

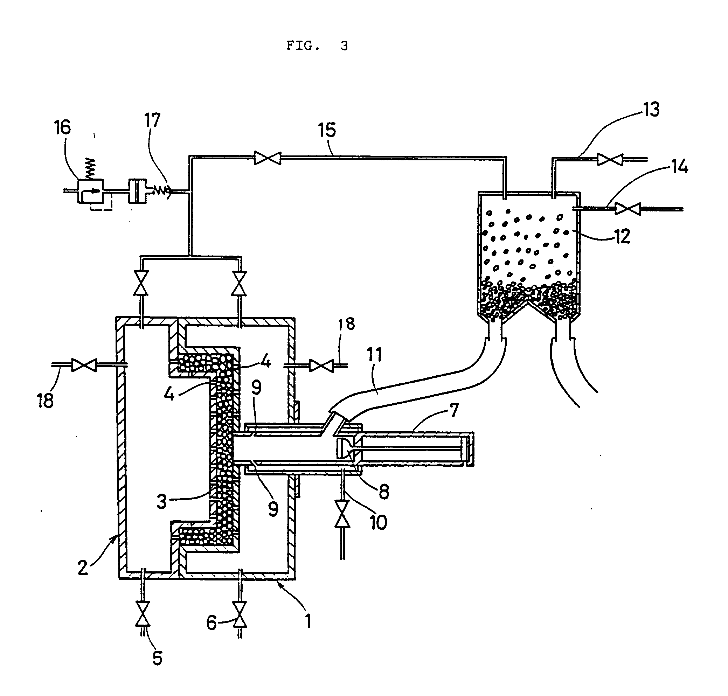

Figure 1 shows an example of a chart of propylene resin pre-expanded beads of the present invention obtained in Example 2 measured by the DSC method, which is to explain how to determine the quantity of the peak fusion heat QH based on the melting point at the high temperature side. Figure 2 is a DSC chart showing an example of measurement for the melting point TM of the propylene resin used in the present invention by the DSC method. Figure 3 is a schematic representation showing an embodiment of an apparatus used for practicing the present invention.

The process of the present invention for production of molded articles which comprises compressing pre-expanded beads of propylene resin under a gaseous pressure, filling the compressed beads in a mold which can be closed but cannot be sealed, then venting the mold and heating and fusing the beads with steam thereby producing the molded article in the shape of the mold, characterized in that pre-expanded beads of a polypropylene resin have two melting points when measured by differential scanning calorimetry and have a quantity of the peak fusion heat $Q_H$ based on the melting point at the high temperature peak of the two melting point peaks of 0.3 to 3.5 cal/g (1.26 to 14.65 J/g) and a compression rate of the pre-expanded beads immediately before the heating with steam to the original pre-expanded beads from 10 to 60%.

Examples of the propylene resin which can be used in the present invention include a propylene homopolymer, an ethylene-propylene random copolymer, an ethylene-propylene block copolymer, an ethylene-propylene-butene random copolymer, a propylene-vinyl chloride copolymer, a propylene-butene copolymer and a propylene-maleic anhydride copolymer; preferred are those prepared by stereoregular polymerization. These polymers may be used singly or in combination of two or more.

It is preferred that the propylene resin is in a noncrosslinked state but it may also be crosslinked using peroxides or radiation. Further, the resin may also be used in admixture with other thermoplastic resins that can be mixed and used, for example, low density polyethylene, straight chain low density polyethylene, polystyrene, polybutene and ionomers, in such a range that does not injure the properties of the propylene resin. In case that, for example, low density polyethylene, straight chain low density polyethylene, polybutene or ionomers are used in combination, 5 to 20 parts (by weight, hereafter the same) are preferred and, in the case of using polystyrene in combination, 5 to 10 parts are preferred, based on 100 parts of the propylene resin.

In order to achieve good pre-expansion, in general, the propylene resin is previously fused and subjected to fabrication in a desired shape of beads such as a cylindrical, cylindroidal, spherical, cubic or rectangular shape, using an extruder, a kneader, a Banbury mixer, a roll, etc. in such a manner that the mean diameter of the bead is 0.1 to 10 mm, preferably 0.7 to 5 mm.

The pre-expanded beads of propylene resin of the present invention have two melting points when measured by the DSC method. Between the two melting points, the quantity of the peak fusion heat $Q_H$ based on the melting point at the high temperature side is 0.3 to 3.5 cal/g (1.26 to 14.65 J/g), preferably 0.5 to 3.0 cal/g (2.09 to 12.56 J/g).

With respect to the two melting points described above, there is no particular restriction therebetween but it is preferred that the temperature difference between the two melting points is 15 to 25°C from a standpoint that the fusion upon heating readily occurs. The temperature difference between the two melting points is variable depending upon the molecular structure of the resin, the thermal hysteresis of the resin, the quantity of blowing agent and the expansion pressure. Expansion at the high temperature side increases the temperature difference between the two melting points. Further the melting point at the low temperature side is generally in a range of 125 to 155°C and the melting point at the high temperature side generally in a range of 145 to 175°C; which varies depending upon the kind of the propylene resins used.

To produce the propylene resin pre-expanded beads having the quantity of the peak fusion heat $Q_H$ of 0.3 to 3.5 cal/g (1.25 to 14.65 J/g) described above, there is not particular limitation as to the process; for example, there is applicable a process which comprises incorporating a volatile blowing agent into propylene resin beads in a pressure vessel, dispersing them in water with stirring, heating the dispersion to a determined expansion temperature under pressure and then discharging the aqueous dispersion into a low pressure region. The quantity of the peak fusion heat $Q_H$ varies depending upon the molecular structure and the other parameters of the resin mentioned above but a high expansion temperature generally results in a small $Q_H$.

When the melting point of the propylene resin beads is designated TM °C in this process, the pre-expanded beads of the present invention can be readily obtained by controlling the expansion temperature generally in a range of (TM - 4) to (TM + 10)°C.

The reason why the expansion temperature is set in the range described above is that the temperature can be appropriately chosen depending upon the kind of the propylene resin, amount of the blowing agent used and expansion magnification of the pre-expanded beads.

Examples of the volatile blowing agent which can be incorporated into the propylene resin beads used in the present invention include aliphatic hydrocarbons such as propane, butane, pentane and hexane; alicyclic hydrocarbons such as cyclopentane and cyclobutane; halogenated hydrocarbons such as trichloromonofluoromethane, dichlorodifluoromethane, dichlorotetrafluoroethane, trichlorotrifluoroethane, methyl chloride, methylene chloride and ethyl chloride. These blowing agents may be used singly or in combination of two or more. There is no limitation to the amount to be used but the blowing agent may be appropriately used depending upon the desired expansion degree of the propylene resin pre-expanded beads; in general, the amount used is 5 to 50 parts based on 100 parts of the propylene resin.

Upon preparation of the aqueous dispersion described above, there can be used as dispersing agents, for example, calcium tertiary phosphate, basic magnesium carbonate, basic zinc carbonate or calcium carbonate. A small quantity of surface active agents, for example, sodium dodecylbenzenesulfonate, sodium n-paraffin sulfonate or sodium $\alpha$-olefin sulfonate may also be used.

The amount of such a dispersing agent or surface active agent varies depending upon the kind thereof, the kind of the pre-expanded beads and their amount used. Generally 0.2 to 3 parts in the case of the dispersing agent and 0.001 to 0.1 part in the case of the surface active agent, based on 100 parts of water, are used.

Further it is preferred that the propylene resin having incorporated therein the volatile blowing agent is added generally in an amount of 20 to 100 parts to 100 parts of water, in order to render dispersibility in water good.

The thus prepared aqueous dispersion is heated under pressure and discharged through an open orifice of 2 to 10 mm $\emptyset$ into a low pressure region to pre-expand the propylene resin pre-expanded beads. Thereby the propylene resin pre-expanded beads of the present invention are obtained.

The aqueous dispersion described above is heated to the expansion temperature in a pressure vessel under pressure as described above. The heating temperature varies depending upon the kind of the propylene resin used, and upon which value of the quantity of the peak fusion heat $Q_H$ the desired propylene resin pre-expanded beads measured by the DSC method based on the melting point at the high temperature side is chosen from 0.3 to 3.5 cal/g (1.26 to 14.65 J/g) as described above. When the melting point of the used propylene resin pre-expanded beads measured by the DSC method is designated TM°C, the heating temperature is chosen preferably from the range of (TM - 4) to (TM + 10)°C. On the other hand, the pressure is chosen mainly based on the determined expansion magnification but is generally 10 to 50 kg/cm²-G (9.81 to 49.05 bar-G).

There is no particular restriction to the pressure vessel described above. Any vessel is usable as long as it can withstand the pressure and temperature described above. A specific example of such a pressure vessel includes an autoclave type pressure vessel.

Next, the DSC method in the present invention will be described below.

As devices for measurement, mention may be made of ordinary differential scanning calorimeters, for example, Model DSC-2 manufactured by Perkin-Elmer Co., Ltd., Model TAS-100 manufactured by Rigaku Denki K.K., etc.

The melting point TM °C of the propylene resin beads and the quantity of the peak fusion heat $Q_H$ of the pre-expanded beads based on the melting point at the high temperature side are measured at a temperature elevation rate of 10°C/min. using the measurement device as described above, with respect to 1 to 10 mg of the propylene resin bead samples.

Figure 2 shows an example in which TM is measured with a propylene-ethylene random copolymer having an ethylene content of 3.3 wt% as the propylene resin. Figure 1 indicates an example showing a method for measurement of the quantity of the peak fusion heat QH of the pre-expanded beads based on the melting point at the high temperature side, with respect to the propylene resin pre-expanded beads obtained in Example 2 using the propylene resin of Figure 2. A straight line for determining $Q_H$ is given by drawing a tangent from the point at which the gradient of the graph becomes 0 between the peak at the low temperature side and the peak at the high temperature side to the graph in which the peak at the high temperature side ends.

The quantity of the peak fusion heat $Q_H$ of the propylene resin pre-expanded beads used in the present invention is in a range of 0.3 to 3.5 cal/g (1.26 to 14.65 J/g), preferably 0.5 to 3.0 cal/g (2.09 to 12.56 J/g). With less than 0.3 cal/g (1.26 J/g), dimensional shrinkage (sink mark) of the molded article becomes large. Further when $Q_H$ exceeds 3.5 cal/g (14.65 J/g), surface property of the molded article becomes worse and at the same time, internal fusibility becomes worse so that the heating temperature must be raised, resulting in a long molding cycle.

The thus obtained pre-expanded beads are charged in a pressure vessel and compressed by gaseous pressure. After the pre-expanded beads are filled in a mold which can be closed but cannot be sealed, an excess of the gas is released from the mold. In this case, the compression rate of the pre-expanded beads is in the range of 10 to 60%. Although there is no limit with regard to the method for filling the mold for molding with preexpanded beads, the following method facilitates the manufacture of foamed articles high in quality with regard to the external appearance.

In accordance with this method the pressure in the pressure vessel in which the pre-expanded beads are compressed is substantially equal to that in the mold for molding (under equal pressure condition). The pre-expanded beads compressed in the pressure vessel are introduced into the mold by using a common feeder for beads molding. When the mold is filled with the pre-expanded beads, the filling gas (normally air) ceases to flow into the mold, and excessive pre-expanded beads in the feeder are returned to the pressure vessel (called "blow back"). Thus the mold is properly filled up with the compressed pre-expanded beads, neither excessively nor insufficiently. After filling, the piston of the feeder is closed and excessive gas in the mold is released. Then, the pre-expanded beads are heated and fused with steam to give a molded article in the shape of the mold. The molded article is withdrawn from the mold and cured and heated in a conventional manner to give the foamed article of polypropylene.

Then, referring to Fig. 3, described below is an embodiment of the present invention.

At first, pre-examined beads of a propylene resin are fed through the pre-expanded beads feeding line (14) into a pressure vessel (12) and compressed air is introduced from the pressure line (13) to rise the pressure in the vessel (12) to the predetermined level. Then, a mold (3) consisting of a cavity (1) and a core (2) which can be closed but cannot be sealed is filled using the feeder (7) with compressed pre-expanded beads.

The mold (3) and the pressure vessel (12) are then linked with a pressure-equalizing line (15), to keep the pressure in both parts approximately at the same level.

The way the mold is filled with pre-expanded beads using the feeder (7) is basically the same as in the usual method molding beads. As shown in the figure, with the piston (8) open, the air for filling (10) is injected into the mold (3) by an air nozzle (9). The pressure in the pressure hose (11) is reduced due to the above-mentioned flow of the air to below the atmospheric level. The pre-expanded beads start flowing into the mold (3), carried by the stream of air injected from the air nozzle (9). The mold (3) has many small holes (4) in its walls, which are permeable to air or vapor but not to the pre-expanded beads. Hence the air for filling flows through the said small holes (4) into the pressure equalizing line (15). If the air pressure is above the level set by a pressure regulating valve (16), the excessive air is discharged through a check valve (17) provided in the pressure equalizing line (15) so that, during filling, the pressure in the system is kept at the predetermined level. When the mold (3) is filled with the pre-expanded beads, the air for filling (10) ceases flowing and starts flowing back toward the pressure vessel (12) together with excessive pre-expanded beads. Thus, the mold is filled up properly with the pre-expanded beads, neither excessively nor insufficiently. When the mold (3) is filled with the pre-expanded beads, the piston (8) is closed and excessive air is discharged (usually to bring the pressure to the atmospheric level with the drain valves (5) and (6) opened ] . In the same way as used in the method of molding beads vapor is introduced into the mold (3) through a vapor line (18) for heating the pre-expanded beads. The pre-expanded beads are caused to foam and fuse together and the foamed article is taken out of the mold (3) after cooling with water from the cooling water line (not shown).

The compression rate of the pre-expanded beads described above is determined as follows.

The compression rate is a value obtained by dividing the weight of the pre-expanded beads of polypropylene filled in the mold described above under atmospheric pressure using a feeder as used for expanded styrol, by the weight of the pre-expanded beads after discharging an excess of the gas in the mold subsequent to the compressive filling described above and is expressed by the equation described below:

$$\text{Compression rate (\%)} = \left[ 1 - \frac{\text{Weight of pre-expanded beads upon filling under atmospheric pressure}}{\text{Weight of pre-expanded beads upon compressive filling}} \right] \times 100$$

With less than 10% compression rate described above, the surface property of the molded article becomes worse and sink mark or shrinkage tends to occur; on the other hand, when the compression rate exceeds 60%, internal fusion becomes worse so that the molding cycle is prolonged and at the same time, pressure strength of a molding machine, a mold, etc., becomes greater, which is not economical.

Now, the present invention will be described in more detail referring to the examples, comparative examples and reference examples but is not deemed to be limited to these examples.

Examples 1 to 13, Comparative Examples 1 to 8 and Reference Examples 1 and 2

In a pressure vessel were charged 100 parts of ethylene-propylene random copolymer (manufactured by Sumitomo Chemical Co., Ltd.; "NOBLEN", ethylene content of 3.3 wt%) pellets (one bead weight of approximately 1.8 mg, melting point TM of 143.5°C by the DSC method), 20 to 35 parts of dichloro-difluoromethane, 1.5 parts of powdery basic tertiary calcium phosphate and 0.006 parts of sodium n-paraffin sulfonate as dispersing agents together with 300 parts of water followed by heating to predetermined temperatures, respectively. The pressure in the vessel in this case was approximately 17 to 30 kg/cm$^2$-G (16.68 to 29.43 bar-G). While maintaining the pressure in the vessel at 17 to 31 kg/cm$^2$-G (16.68 to 30.41 bar-G) and compressing the dichlorodifluoromethane, a valve located at the lower part of the pressure vessel was opened and the aqueous dispersion was discharged through an orifice plate having an opening diameter of 4 mm φ under atmospheric pressure to perform pre-expansion, whereby pre-expanded beads having an expansion magnification of 9.5 to 50 times were obtained.

The thus obtained pre-expanded beads had the quantity of the peak fusion heat $Q_H$ based on the melting point at the high temperature side measured by the DSC method, as shown in Table 1. In the examples and the comparative examples, molded articles were obtained by charging the pre-expanded beads in a pressure vessel, compressing the beads under air pressure, filling them in a block mold having a size of 290 X 270 X 50 mm in various compression rates and heating them under a steam pressure of approximately 6.0 to 2.0 kg/cm$^2$-G (5.89 to 1.96 bar-G).

With respect to the physical properties of the molded articles thus obtained, fusion rate, dimensional shrinkage rate and surface appearance of each molded article were evaluated by the methods described below. The results are shown in Table 1. In Table 1, the steam pressure for the heating and the molding cycle upon the molding are also described.

In the reference examples, molded articles were obtained by charging the pre-expanded beads in a pressure vessel, compressing the beads by air of 70 °C × 9 kg/cm$^2$-G (8.83 bar-G) for 120 minutes to impart the internal pressure to the pre-expanded beads, withdrawing the beads under atmospheric pressure, filling in the mold described above and heating with steam under approximately 3.5 and 2.0 kg/cm$^2$-G (3.43 and 1.96 bar-G). Physical properties, etc. are shown in Table 1.

For reference, internal pressures of the beads immediately before the filling into the mold are also given in the table.

Fusion rate:

After making a crack having a depth of approximately 5 mm on the surface of the molded article with a knife, the molded article is broken along with the crack, the rupture cross-section is observed and the rate of the number of the broken beads to the total number of the beads is determined.

◎ :        fusion rate of 80% or more
○ :        fusion rate of 60 to less than 80%
Δ :        fusion rate of 50 to less than 60%
× :        fusion rate of less than 50%

A standard fusion rate satisfactory for the molded article is generally at least 60%.

Dimensional shrinkage rate:

The size of the molded article is measured with a vernier caliper and the shrinkage rate is calculated based on the size of its mold.

◎ :        shrinkage rate of less than 2%
○ :        shrinkage rate of 2 to less than 3%
Δ :        shrinkage rate of 3 to less than 5%
× :        shrinkage rate of 5% or more

Surface appearance:

The molded articles are evaluated based on the following measures:
○ :        Unevenness is not observed on the surface and gaps between the beads are hardly observed.

6

Δ : Unevenness is not observed on the surface but gaps between the beads are somewhat remarkable.

× : Unevenness is observed on the surface and gaps between the beads are extremely large.

Table 1

| | Forming Magnification of Pre-expanded beads | Peak Calory Fused at High Temperature $Q_H$ (cal/g) | Compression Rate (%) | Maximum Heating Steam Pressure (kg/cm²·G) | Molding Cycle (second) | Magnification of Molded Article (time) | Dimensional Compression Rate | Fusion Rate | Surface Appearance |
|---|---|---|---|---|---|---|---|---|---|
| Example 1 | 9.5 | 3.3 | 30 | 5.5 | 3'15 | 9.5 | ○ | ◎ | ○ |
| 2 | 9.5 | 2.0 | 30 | 5.5 | 3'10 | 10.0 | ○ | ◎ | ○ |
| 3 | 9.5 | 0.5 | 30 | 5.5 | 3'00 | 10.5 | ◎ | ◎ | ○ |
| 4 | 9.5 | 2.0 | 10 | 3.0 | 2'55 | 13.8 | △ | ◎ | ○ |
| 5 | 9.5 | 2.0 | 40 | 6.0 | 3'20 | 8.9 | ◎ | ○ | ○ |
| 6 | 19.0 | 3.3 | 40 | 3.5 | 3'05 | 15.8 | ◎ | ○ | ○ |
| 7 | 19.0 | 2.1 | 40 | 3.5 | 2'55 | 16.0 | ○ | ◎ | ○ |
| 8 | 19.0 | 0.4 | 40 | 3.5 | 2'50 | 16.1 | ○ | ◎ | ○ |
| 9 | 19.0 | 2.1 | 20 | 3.0 | 2'40 | 21.2 | ◎ | ○ | ○ |
| 10 | 19.0 | 2.1 | 60 | 6.0 | 3'10 | 11.0 | ◎ | ◎ | △ |
| 11 | 28.0 | 2.1 | 40 | 3.0 | 2'40 | 23.4 | ○ | ◎ | ○ |
| 12 | 38.0 | 2.2 | 40 | 3.0 | 2'30 | 31.0 | ○ | ◎ | ○ |
| 13 | 50.0 | 2.2 | 40 | 3.0 | 2'15 | 45.0 | ◎ | ◎ | ○ |
| Comparative Example 1 | 9.5 | 3.7 | 30 | 6.0 | 3'30 | 9.2 | ◎ | △ | × |
| 2 | 9.5 | 0.2 | 30 | 6.0 | 3'10 | 9.4 | × | ○ | ○ |
| 3 | 9.5 | 2.0 | 5 | 2.0 | 3'10 | 12.5 | × | ○ | ○ |
| 4 | 9.5 | 2.0 | 62 | 6.0 | 4'00 | 5.0 | ◎ | × | ○ |
| 5 | 19.0 | 3.6 | 40 | 4.0 | 3'20 | 15.9 | ◎ | △ | △ |
| 6 | 19.0 | 0.2 | 40 | 4.0 | 3'00 | 15.8 | × | ○ | ○ |
| 7 | 19.0 | 2.1 | 5 | 2.0 | 2'30 | 24.4 | × | ◎ | ○ |
| 8 | 19.0 | 2.1 | 70 | 6.0 | 3'35 | 8.0 | ◎ | × | ○ |
| Reference Example 1 | 9.5 | 2.0 | 1.5 (inner pressure of particle) 1.3 | 3.5 | 4'00 | 13.5 | ◎ | ◎ | ○ |
| 2 | 28.0 | 2.1 | | 2.0 | 3'00 | 45.0 | ○ | ◎ | ○ |

《 》 : (× 0.981 = bar - G)

《 》 : (× 4.1868 = J/g)

- 17 -

As is evident from the results shown in Table 1, foamed articles of polypropylene having a minimized dimensional shrinkage rate (good dimensional accuracy) and excellent fusion rate and surface appearance can be produced in high productivity, when the quantity of the peak fusion heat $Q_H$ based on the melting point at the high temperature side measured by the DSC method is in a range of 0.3 to 3.5 cal/g (1.26 to 14.65 J/g) when the compression rate of the pre-expanded beads is 10 to 60%. According to the present invention, the mold is filled with the pre-expanded beads like in the common method of molding beads, and then "blowing back" is exercised. This enables proper falling neither excessively nor insufficiently of the mold even if its shape is highly complicated. The molded product is fully satisfactory also with regard to the finished appearance in the vicinity of the feeder as well as the fusibility. Further, as compared to

7

conventional processes in which pre-expanded beads are treated under pressure to impart internal pressure to the beads and then foamed in the mold, the process can save initial investment for installations and molded articles having a quality comparable to that of the conventional molded articles can be obtained.

**Claims**

1. A process for production of foamed molded articles of a polypropylene resin which comprises compressing pre-expanded beads of the propylene resin under a gaseous pressure, filling said compressed beads in a mold which can be closed but cannot be sealed, then venting the mold and heating and fusing the beads with steam thereby producing said molded article in the shape of said mold, characterized in that pre-expanded beads of a polypropylene resin having two melting points when measured by differential scanning calorimetry and having a quantity of the peak fusion heat $Q_H$ based on the melting point at the high temperature peak of said two melting point peaks of 0.3 to 3.5 cal/g (1.26 to 14.65 J/g) are introduced into the mold at a compression rate of 10 to 60%.

2. The process as claimed in claim 1, wherein the pressure in the pressure vessel and in the mold is kept substantially at the same level for introducing the pre-expanded beads and said mold is filled with compressed pre-expanded beads of polypropylene resin.

3. The process as claimed in claim 1, wherein said quantity of the peak fusion heat $Q_H$ is 0.5 to 3.0 cal/g (2.09 to 12.56 J/g).

4. The process as claimed in claim 1 or 3, wherein the temperature difference between said two melting points is 15 to 25 °C.

5. The process as claimed in claim 1, wherein said propylene resin is a propylene homopolymer, an ethylene-propylene random copolymer, an ethylene-propylene block copolymer, an ethylene-propylene-butene random copolymer, a propylene-vinyl chloride copolymer, a propylene-butene copolymer, a propylene-maleic anhydride copolymer or a mixture thereof.

6. The process as claimed in claim 5, wherein said propylene resin is not crosslinked.

7. The process as claimed in claim 1 or 5, wherein said propylene resin is used in admixture with other thermoplastic resin which can be mixed and used therewith.

8. The process as claimed in claim 7, wherein said thermoplastic resin is low density polyethylene, straight chain low density polyethylene, polystyrene, polybutene or an ionomer.

**Revendications**

1. Procédé pour la production d'articles moulés moussés en résine polypropylénique, comportant la compression de perles pré-expansées de résine de propylène sous pression de gaz, le chargement de ces perles comprimées dans un moule qui peut être fermé mais non scellé, puis le dégazage du moule et le chauffage et la fusion des perles avec de la vapeur, produisant ledit article moulé dans la forme dudit moule, procédé caractérisé en ce que les perles pré-expansées d'une résine polypropylénique présentant deux points de fusion à la mesure par calorimétrie par analyse différentielle et ayant une chaleur de fusion de pic $Q_H$, basée sur le point de fusion correspondant au pic de température élevée des deux points de fusion, de 0,3 à 3,5 cal/g (1,26 à 14,65 J/g) sont introduites dans le moule avec un taux de compression de 10 à 60%.

2. Procédé selon la revendication 1, dans lequel les pressions dans le récipient de pression et dans le moule sont maintenues substantiellement au même niveau pour l'introduction desdites perles pré-expansées et dans lequel ledit moule est rempli de perles préexpansées et comprimées de résine polypropylénique.

3. Procédé selon la revendication 1, dans lequel la dite chaleur de fusion de pic $Q_H$ est de 0,5 à 3,0 cal/g (2,09 à 12,56 J/g).

8

**4.** Procédé selon la revendication 1 ou 3, dans lequel la différence de température entre les deux points de fusion est de 15 à 25°C.

**5.** Procédé selon la revendication 1, dans lequel la résine propylénique est un homopolymère de propylène, un copolymère aléatoire d'éthylène-propylène, un copolymère séquencé d'éthylène-propylène, un copolymère aléatoire d'éthylène-propylène-butène, un copolymère de propylène - chlorure de vinyle, un copolymère de propylène-butène, un copolymère de propylène - anhydride maléique, ou un mélange de ces composés.

**6.** Procédé selon la revendication 5, dans lequel ladite résine propylénique n'est pas réticulée.

**7.** Procédé selon la revendication 1 ou 5, dans lequel ladite résine propylénique est utilisée en mélange avec d'autres résines thermoplastiques qui peuvent être mélangées et utilisées avec elle.

**8.** Procédé selon la revendication 7, dans lequel ladite résine thermoplastique est un polyéthylène à basse densité, un polyéthylène basse densité à chaîne droite, un polystyrène, un polybutène ou un ionomère.

**Patentansprüche**

**1.** Verfahren zur Herstellung geschäumter Formgegenstände aus Polypropylenharz, umfassend das Verpressen vorgedehnter Kugeln aus Polypropylenharz unter Gasdruck, Einfüllen der verpreßten Kugeln in eine Form, die verschlossen, aber nicht versiegelt werden kann, Belüften der Form und Erhitzen und Schmelzen der Kugeln mit Dampf, wobei der Formgegenstand in der Form der Gußform hergestellt wird, **dadurch gekennzeichnet,** daß die vorgedehnten Kugeln aus Polypropylenharz, die, gemessen mit der Differentialscanning-Kalorimetrie, zwei Schmelzpunkte besitzen und eine Schmelzwärmepeakmenge $Q_H$, basierend auf dem Schmelzpunkt beim Peak der höheren Temperatur der zwei Schmelzpunktpeaks von 0,3 bis 3,5 Kalorien/g (1,26 bis 14,65 Joule/g) aufweisen, in die Form mit einer Kompressionsgeschwindigkeit von 10 bis 60 % eingeführt werden.

**2.** Verfahren nach Anspruch 1, wobei der Druck im Druckkessel und in der Form für das Einbringen der vorgedehnten Kugeln im wesentlichen auf dem gleichen Niveau gehalten wird und die Form mit komprimierten vorgedehnten Kugeln aus Polypropylenharz gefüllt wird.

**3.** Verfahren nach Anspruch 1, wobei die Schmelzwärmepeakmenge $Q_H$ 0,5 bis 3,0 Kalorien/g (2,09 bis 12,56 Joule/g) beträgt.

**4.** Verfahren nach Anspruch 1 oder 3, wobei die Temperaturdifferenz zwischen den zwei Schmelzpunkten 15 bis 25°C beträgt.

**5.** Verfahren nach Anspruch 1, wobei das Polypropylenharz ein Propylenhomopolymerisat, ein statistisches Ethylen-Propylen-Copolymerisat, ein Ethylen-Propylen-Blockcopolymerisat, ein statistisches Ethylen-Propylen-Buten-copolymerisat, ein Propylen-Vinylchlorid-Copolymerisat, ein Propylen-Buten-Copolymerisat, ein Propylen-Maleinsäureanhydrid-Copolymerisat oder ein Gemisch davon ist.

**6.** Verfahren nach Anspruch 5, wobei das Propylenharz nicht vernetzt ist.

**7.** Verfahren nach Anspruch 1 oder 5, wobei das Propylenharz im Gemisch mit anderen thermoplastischen Harzen verwendet wird, die damit vermischt und verwendet werden können.

**8.** Verfahren nach Anspruch 7, wobei das thermoplastische Harz ein Polyethylen niederer Dichte, ein geradkettiges Polyethylen niederer Dichte, Polystyrol, Polybuten oder ein Ionomer ist.

9

FIG. 1

Endothermism ← → Exothermicity

Temperature (°C)

60 80 100 120 140 160 180

TM 143.5 °C

FIG. 2

11

FIG. 3